Europäisches Patentamt

European Patent Office

Office européen des brevets

(11) Publication number: **0 285 406 B1**

## EUROPEAN PATENT SPECIFICATION

(45) Date of publication of patent specification: **30.09.92**    (51) Int. Cl.⁵: **F16G  1/28**

(21) Application number: **88302864.9**

(22) Date of filing: **30.03.88**

(54) **Power transmission belt and method of manufacture.**

(30) Priority: **31.03.87 JP 80351/87**

(43) Date of publication of application:
**05.10.88 Bulletin  88/40**

(45) Publication of the grant of the patent:
**30.09.92 Bulletin  92/40**

(84) Designated Contracting States:
**DE FR GB IT**

(56) References cited:
**EP-A- 0 176 686
DE-A- 2 359 216
JP-Y-58 038 187**

**PATENT ABSTRACTS OF JAPAN, vol. 6, no.
256 (M-179)[1134], 15th December 1982; &
JP-A-57 149 646 (HONDA GIKEN KOGYO K.K.)
16-09-1982**

**PATENT ABSTRACTS OF JAPAN, vol. 11, no.
157 (M-590)[2604], 21st May 1987; & JP-A-61
286 637 (HONDA MOTOR CO., LTD)
17-12-1986 (Cat. A)**

**PATENT ABSTRACTS OF JAPAN, vol. 4, no.
187 (M-48)[669], 23rd December 1980; & JP-
A-55 132 441 (TSUBAKIMOTO CHAIN K.K.)**

**15-10-1980 (Cat. D,A)**

(73) Proprietor: **BANDO CHEMICAL INDUSTRIES,
LIMITED
2-15, Meiwa-dori 3-chome
Hyogo-ku Kobe-shi(JP)**

(72) Inventor: **Watanabe, Katsuki
Bando Chemical Ind., Ltd. 2-15, Meiwa-dori
3-chome
Hyogo-ku Kobe-shi(JP)**
Inventor: **Minamimure, Mamoru
Bando Chemical Ind., Ltd. 2-15, Meiwa-dori
3-chome
Hyogo-ku Kobe-shi(JP)**

(74) Representative: **Brooke-Smith, Fred et al
Stevens, Hewlett & Perkins 1 Serjeants' Inn
Fleet Street
London EC4Y 1LL(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

This invention relates to the manufacture of power transmission belts and more particularly to power transmission belts the matrix of which is made of an elastomeric material such as low viscosity liquefied urethane.

Power transmission belts of small size and light weight are well known, used for example, as timing belts and cog belts and composed of elastomeric materials such as urethane.

The matrix of these kinds of belt is made of liquefied elastomer material having sufficiently low viscosity to permeate through a covering fabric. It is therefore difficult to form a belt having teeth with a protective fabric surface layer. However, where a high viscosity elastomer is used, a protective surface layer of fabric can be formed by the commonly used process of using the pressure of the elastomer to mould the fabric, because the elastomer does not permeate the covering fabric. But when forming the toothed faces of the belt with a fabric covering the toothed face by injecting low viscosity elastomer material under pressure into grooves of a cavity die for forming tooth parts of the belt it is difficult to form the fabric into a covering layer for the teeth because the liquefied elastomer material permeates through the fabric layer. When the belt has to be formed by the abovementioned process, there is a problem of increased cost caused by the need for permeation-proofing treatment of the covering fabric.

Therefore, toothed power transmission belts such as timing belts, cog belts and the like, formed by using liquefied elastomer material of low viscosity are generally raw edged belts which do not provide covering fabric on their teeth.

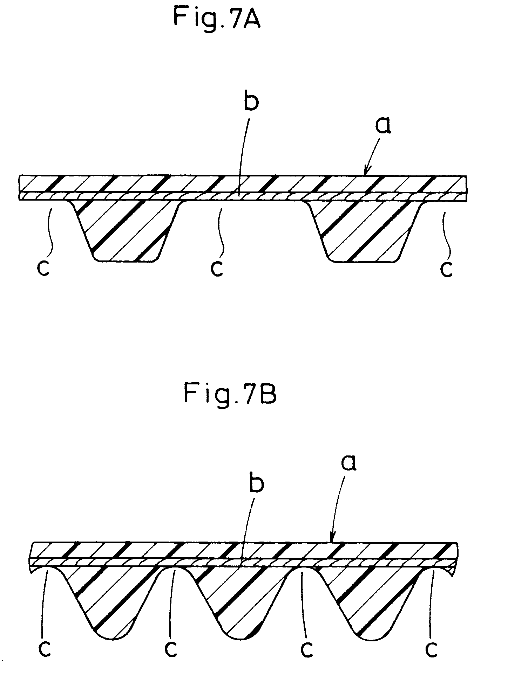

However, in the power transmission belt with a raw edge, as shown in Figure 7A and Figure 7B, tensile cords (b) embedded in the belt (a) are exposed at the bases (c) of the teeth. Therefore, in the case of a timing belt (Figure 7A) there may occur wear or breakage resulting from the contact of the tensile cords with top faces (not shown) of toothed pulley, so that the belts do not have a long useful life.

In the cog belt (Figure 7B) trained to the V-pulley, there is also a problem that slip can occur due to insufficient strength under lateral pressure when a high load is applied, and permanent deformation may arise. Thus, in the raw-edge belt, particularly in a timing belt where tensile cords (b) may directly contact toothed pulleys, the protection of the cords is of great importance.

It has been proposed to provide the valleys (c) between the teeth of a timing belt with an elastomer surface layer (d) for protecting the tensile cords (b), as shown in Figure 8A and Figure 8B, (For example, JP-Y-58-38187). However this layer is prone to cracking.

Moreover, although a non-woven fabric layer would seem to be easily formable near the surface of the timing belt, it is not used in practice because in that case the above-mentioned permeation-proofing treatment of the non-woven fabric layer against the elastomer material is required.

In the case of the cog belt, the above-mentioned composition for protecting the tensile cords (b) is not particularly required since there are not so many problems as in the timing belt. However, improvement of the strength against lateral pressures is still a great necessity in its capacity for power transmission, especially for a small-sized and lightweight transmission device.

In view of the above-mentioned problems the objects of this invention are to provide a power transmission belt that can display sufficient durable strength under any condition, keeping the tensile cords embedded entirely into the belt body without being exposed in the valleys between the teeth, and to provide a method of manufacture where such a construction can be easily formed even in a raw edged belt.

JP-A-57-149646 discloses a power transmission belt according to the pre-characterizing part of claim 1.

According to this invention there is provided an endless power transmission belt comprising a body and circumferentially spaced teeth at the inner periphery of the body with valleys between adjacent teeth, said belt being formed from a matrix of an elastomeric material in which are embedded tensile cords extending circumferentially through the body in predetermined depth from the surface of said valleys, and a layer of high strength non-woven fibre material extending continuously circumferentially of the belt at the radially inner side of the cords, the elastomeric material being diffused through said layer, characterised in that said layer is radially compressed where it extends circumferentially across said valleys and is substantially uncompressed where it extends circumferentially across the teeth.

The invention also provides a method of manufacture of a power transmission belt from an elastomeric material with tensile cord reinforcement, using a cylindrical internal die the cylindrical circumference of which is axially toothed to provide a plurality of outer faces to form the valleys between the teeth of said belt and a plurality of grooves alternating with said outer faces to form the teeth of the belt, and a cylindrical external die disposed concentrically about the internal die, the inner periphery of the external die being spaced away from said outer faces of said internal die, which method is characterized by the steps of covering said cylindrical face of said internal die with a bulky non-woven fabric without pressure, winding

2

the tensile cord spirally over said non-woven fabric along the outer cylindrical face of said internal die so as to compress said non-woven fabric on said outer faces to provide a predetermined thickness thereof on said outer faces, placing said external die about said internal die, injecting the elastomeric material into the gap between the internal and external dies, hardening said elastomer material and extracting the moulded body.

The invention will now be described in more detail with reference by way of example to the accompanying drawings, in which:

Figure 1A and Figure 1B are respectively partially sectional views of power transmission timing and cog belts according to this invention,

Figures 2, 3 and 4 show successive steps in the manufacturing process of this invention,

Figure 5, Figure 6A and Figure 6B are schematic illustrations of test instruments for toothed belts, and

Figures 7A, 7B, 8A and 8B are partially sectional views of conventional power transmission belts.

The power transmission belt according to this invention comprises a belt body composed of the elastomer matrix, the tensile cords, and the needle punched bulky non-woven fabric, particularly utilizing the deforming characteristics of this non-woven fabric under compressive stress.

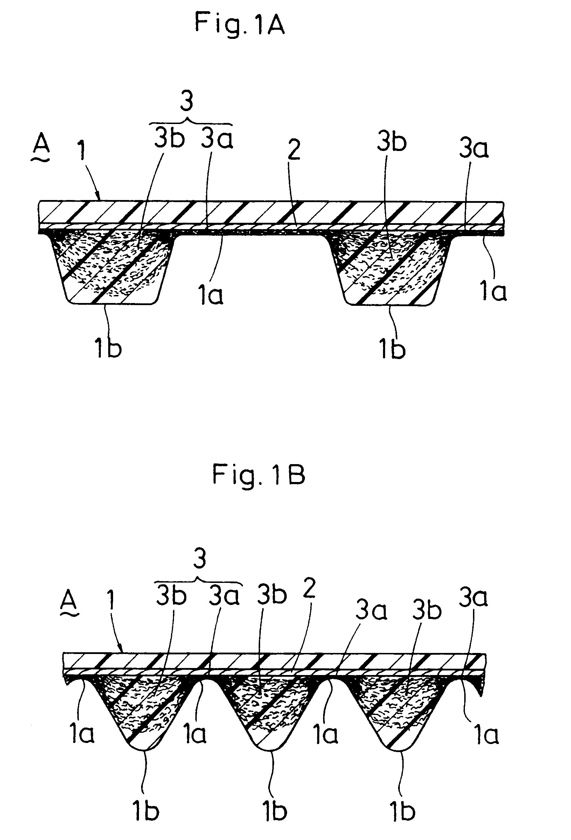

In the endless timing and cog power transmission belts (A) shown in Figure 1A and Figure 1B respectively a plurality of projecting tooth parts 1b are formed with valleys or tooth bottoms formed therebetween on the inner circumference of a belt body 1 whose matrix is composed of an elastomer. In the belt body 1, tensile cords 2 are embedded extending longitudinally at predetermined depth below the surface of the tooth bottoms 1a, and the circumference on which the tensile cords 2 extend is along a pitch line of the belt body 1. In the tooth bottoms 1a of the belt body 1, a compressed non-woven fabric layer 3a consisting of a non-woven fabric 3 and the elastomer matrix permeated therethrough is provided for completely covering the tensile cords 2, the non-woven fabric 3 being composed of high strength fibre 3b.

Since the tensile cords 2 are completely covered by the compressed non-woven fabric layer 3a with elastomer matrix permeated therethrough at the tooth bottoms 1a of the belt body 1, the tensile cords 2 are completely protected from contact with the toothed pulley, and from friction in case of a timing belt; the strength under lateral pressure is increased in the case of a cog belt.

Also, the inside of the tooth parts 1b of the belt body 1 is substantially composed of an elastomer matrix wherein a fibre 3b of the bulky non-woven fabric 3 continuing on said nonwoven fabric layer 3a is distributed evenly diffusedly under no bias by the tensile cords. Therefore, this nonwoven fabric fiber 3b functions as elastomer reinforcing fiber at the tooth parts 1b and improves of shear strength at the tooth parts 1b.

Moreover, since the nonwoven fabric layer 3a with the elastomer material permeated therethrough at the tooth bottoms 1a is composed of the bulky nonwoven fabric 3 biased by the tensile cords 2, it can be controlled in optional thickness by adjusting the bias force, namely. PLD (pitch line difference) between the surface of the tooth bottoms 1a and the pitch line can be adjustable optionally.

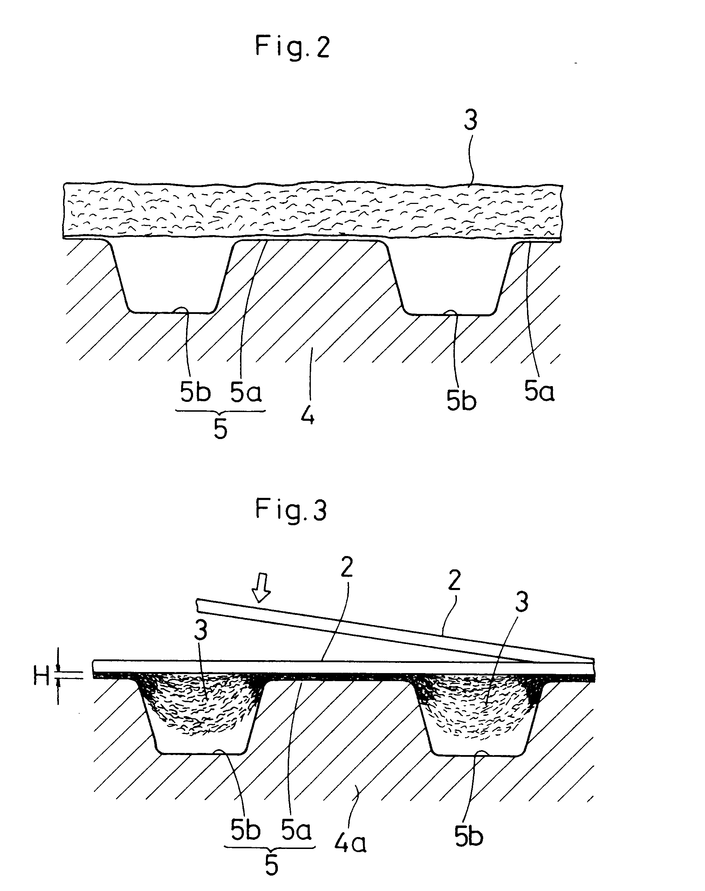

As shown in Fig.2, Fig.3 and Fig.4, forming dies 7 adapted to manufacture the transmission belt are provided with a cylindrical internal die 4 and a cylindrical external die 6. The outer cylidrical circumferences of the internal die 4 is toothed axially samely, and in this toothed face 5 a plurality of grooves 5b are adapted to form the tooth parts 1b of the transmission belt and a plurality of top faces 5a are adapted to form the tooth bottoms thereof. And inner periphery of the exteral die 6 is formed accurately cylindrically to be engaged with the top faces 5a of the internal die 4 with a certain gap.

In the manufacturing processes, as shown in Fig.2 the bulky nonwoven fabric 3 is covered on the toothed face 5 of the internal die 4 under non pressure, hereafter, as shown in Fig.3, the tensile cords 2 are wound spirally thereover along the toothed face 5 so as to press the nonwoven fabric 3 in predetermined thickness (H) at the tooth bottoms 1b. Then the nonwoven fabric 3 enter the grooves 5b of the internal die 4 urged by the tensile cords 2, keeping bulky under non pressure.

Therefore, the bulky nonwoven fabric 3 is compressed on the top faces 5a of the internal die 4 while it is distributed "softly" under non pressure in the grooves 5b.

Also, while the compressed nonwoven fabric layer 3a is decreased in thickness H compressed by the tensile cords 2, at the same time, it performs as a spacer for separating the tensile cords 2 from the internal die 4.

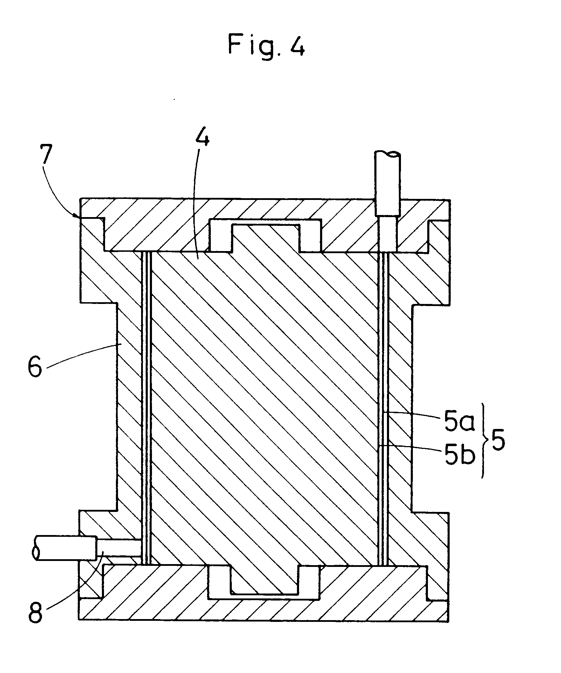

Abovementioned internal die 4 is put into the external die 6 to set up a forming die 7 as shown in Fig.4, and the liquefied elastomer material of low viscosity is injected from an injecting port 8. Then, this elastomer material is smoothly permeated through the compressed or non pressurised nonwoven fabric 3 in the gap of the forming dies 7 and an accurately toothed belt is formed along the shape of the top faces 5a and the grooves 5b of the internal die 4.

Then the elastomer material is hardened and hereafter the components of the forming die 7 are separated, deriving a cylindrically shaped body of the power transmission belt. Forementioned power transmission belt (A) is obtained by slicing roundly in predetermined width with a standard process.

Test examples obtained with this manufacturing process will now be explained below.

Test Example 1:

A bulky polyester nonwoven fabric 3 whose weight per unit area is 70 gr/ m$^2$, and whose full thickness under non pressure is 1 mm was needle punched and not done with adhesion treatment. And the outer circumference of the internal die 4 for forming a timing belt whose diameter was about 155 mm was covered softly therewith so that almost no pressure is applied there. Then, the tensile cords 2 (made by Dupon Co., the trade name of which is "Kevlar") composed of aromatic polyamide were wound spirally thereon with a constant tension so that the nonwoven fabric 3 should be 0.1 mm in thickness H at the top faces 5a of the internal die 4 for forming the tooth bottoms 1a.

In this process, the nonwoven fabric 3 was, as shown in Fig.3, compressed to be 0.1mm in thickness on the top faces 5a and stuffed softly into the grooves 5b that is 1.2 mm in depth.

Next, this internal die 4 was put into the external die 6. Hereafter, liquefied polyurethane resin blended as shown below was injected by vacuum force under the standard process, then the cylinder shaped body for the timing belt was formed.

```
                                                    Parts by weight

   Prepolymer ------------------------------------------ 100

   Hardener  (3,3'-dichloro-4,4'aminodiphenylmethane) ---- 13

   Plasticizer  di-(2-ethylhexyl)sebacate(DOS)------------ 10

   Coloring Agent ------------------------------------- 0.5
```

After that, a plurality of ring-shaped timing belts with 6mm in width, 486mm in circumferencial length and 3mm in teeth pitch were cut therefrom by slicing roundly abovementioned cylindrically shaped body.

This timing belt was composed so that at the tooth bottoms 1a the compressed nonwoven fabric layer 3a was formed with the polyurethane matrix permeated therethrough, covering the tensile cords 2 entirely. In addition, a short fiber 3b composing the nonwoven fabric 3 was distributed evenly diffusedly in an elastomer matrix of the tooth parts 1b partly resolved under influence of turbulent flow when injecting the liquefied material.

Test Example 2:

The nonwoven fabric 3 which was the same as the one in Test Example 1 was wound softly around the outer circumference of the internal die 4 for forming a cog belt whose diameter was about 155 mm so that no pressure is applied there. Then, the tensile cords 2 made of polyester with 0.5mm in diameter were wound spirally thereon with constant tension so that the nonwoven fabric 3 should be 0.1 mm in thickness H at the top faces 5a of the internal die 4.

in this process, the nonwoven fabric 3 was, as shown in Fig.3, compressed to be 0.1mm in thickness on the top faces 5a and stuffed softly into the grooves 5b whose depth is 1.2mm.

Next, this internal die 4 was put into the external die 6, and the liquefied polyurethane resin, blended as in Example 1, was injected by vacuum force in the standard process, then, a cylinder shaped body for the cog belt was formed.

By slicing roundly abovementioned cylinder shaped body of the cog belt, a plurality of the cog belts of 6 mm width and 488 mm circumference were cut out.

This cog belt was composed almost the same as in Test Example 1 except the difference of the shape of the toothed face.

Performance Test:

The Performance Test results of the belt formed in Test Example 1 and 2 are shown below.

4

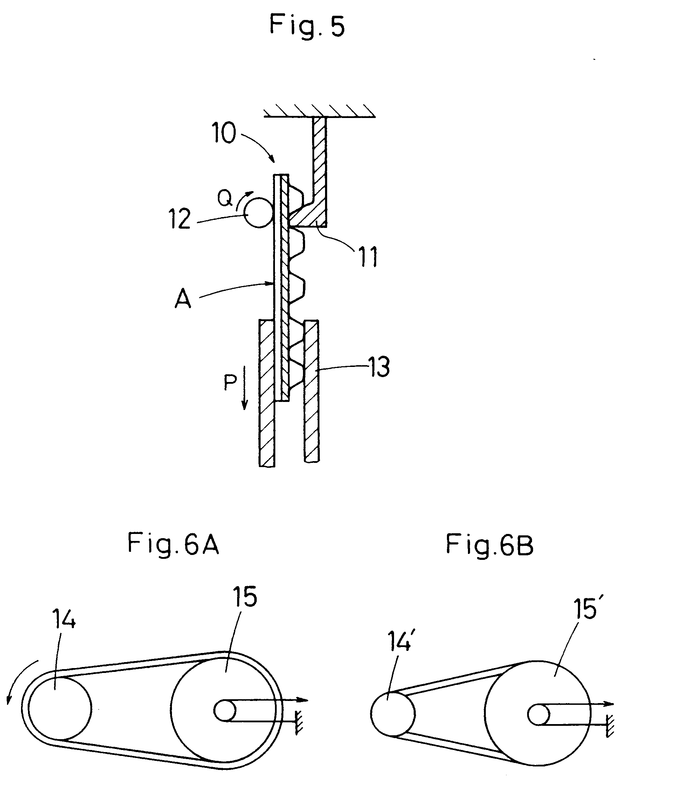

The shearing strength (kgf/1tooth) of tooth parts of three samples randumly taken out of the timing belts manufactured in Test Example 1 were measured with a shearing test instrument shown in Fig.5, deriving the results shown in Table 1.

The test instrument 10, as shown in Fig.5, installs a claw 11 engaged with tooth grooves and an interval keeping roll 12. And the shear strength of the toothed power transmission belt (A) as measured in the process that after the power transmission belt (A) is clipped therebetween and pulled in the direction of an arrow P in the figure the interval keeping roll 12 is rotated in the direction of an arrow Q in the figure.

## Table 1

| Belts | Shear Strength (kgf/ tooth) | | | |
|---|---|---|---|---|
| Sample No. | 1 | 2 | 3 | Average |
| TE 1 | 35.6 | 37.6 | 38.1 | 37.0 |
| C 1 | 24.8 | 28.2 | 25.3 | 26.1 |
| C 2 | 38.5 | 39.2 | 40.4 | 39.4 |

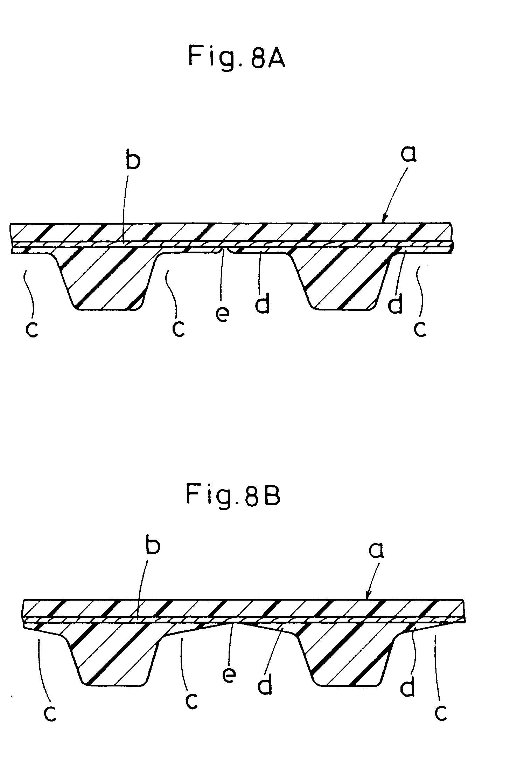

In the above table 1, the sample belts TE1 were raw-edge timing belts manufactured in Test Example 1; the sample belts C1 were also raw-edge timing belts manufactured in conventional process as shown in Fig.8A and formed to have the same shape and dimension as in Test Example 1; the sample belts C2 were the timing belts having fabric layer for covering tooth parts made of chloroprene rubber, manufactured in a conventional process and formed as the ones in Test Example 1.

Referring to the Table 1, it was confirmed that even the raw-edge belt derived in this invention obviously could be equal in shear strength to the comventional belt having a fabric layer for covering surface.

Next, the life time under real driven condition was tested for the timing belts of Test Example 1 in this invention as shown in Fig.6A in the manner that it was trained between a driving pulley 14 with twenty teeth and a driven pulley 15 with thirty-eight teeth, loaded 950W to the driven pulley 15, and the driving pulley 14 is rotated in 10000rpm. The results is shown in Table 2.

## Table 2

| Belts | Life in Driven Condition (hour) | | | |
|---|---|---|---|---|
| Sample No. | 1 | 2 | 3 | Average |
| TE 1 | 175.4 | 162.5 | 168.7 | 168.9 |
| C 1 | 69.3 | 75.8 | 80.4 | 75.2 |
| C 2 | 168.0 | 157.2 | 178.8 | 168.0 |

The sample belts C1, C2 in Table 2 were picked up from forementioned timing belts.

The table shows clearly that they are also superior in driving ability in the same manner as in beforementioned shear strength.

A usable life was tested for three samples randomly taken out of the cog belts in Test Example 2, as shown in Fig.6B, in the manner that they were trained between a driving pulley 14' with 20mm in diameter and a driven pulley 15' with 40mm in diameter, loaded 160W to the driven pulley and the driving pulley 14' is rotated in 500rpm. The results are shown in Table 3.

5

### Table 3

| Belts | Usable Life (Time unit Sliped) | | | |
|---|---|---|---|---|
| Sample No. | 1 | 2 | 3 | Average |
| TE 2 | 107.0 | 116.2 | 121.4 | 115.0 |
| C 1 | 89.3 | 50.5 | 72.1 | 70.6 |

In this table, the sample belts in Test Example 2 were raw-edge belt; the sample belts C1 were also raw-edge cog belts derived by conventional manufacturing process. This table shows that the cog belts derived in this invention are superior to the conventional ones.

In this invention as explained above, even in the raw-edge belt which is not provided with fabric layer for covering surface at the toothed face, tensile cords 2 are entirely covered with a thinly compressed nonwoven fabric layer with elastomer material permeated therethrough, and the nonwoven fabric is mixed as reinforcing fiber into the elastomer matrix which is forming the tooth parts 1b, breakage and fracture of the tensile cords can be surely prevented. And in the cog belt, the strength under lateral pressure in the V-belt used for a friction transmitting and shear strength of the tooth parts are remarkably improved. Therefore, by this invention labour can be greatly saved in maintenance of the power transmission belt in small-sized transmission device in which the raw-edged belt is preferably used.

With the method of manufacture described above, the PLD (pitch line difference) of the tensile cords embedded in the power transmission belt is optionally adjustable without further equipment, and reinforced power transmission belts can be easily manufactured. As an additional advantage, the stress distribution of the toothed surface which effects rigidity of the belt can be ideal in that the density of the non-woven fabric can be reduced toward the tooth top and increased toward the base of the teeth.

The power transmission belt of this invention is adapted for many belts transmitting devices used in various industries, for example, motorcars, motorcycles and automatic systems. Especially, the timing belt of this invention has advantages of having small size and light weight with long usable life when used in a bicycle, extending about a pair of toothed pulleys mounted on driving and driven shafts respectively.

**Claims**

1. An endless power transmission belt comprising a body (1) and circumferentially spaced teeth (1b) at the inner periphery of the body with valleys (1a) between adjacent teeth, said belt being formed from a matrix of an elastomeric material in which are embedded tensile cords (2) extending circumferentially through the body (1) in predetermined depth from the surface of said valleys, and a layer of high strength non-woven fibre material (3) extending continuously circumferentially of the belt at the radially inner side of the cords (2), the elastomeric material being diffused through said layer, characterized in that said layer (3) is radially compressed where it extends circumferentially across said valleys (1a) and is substantially uncompressed where it extends circumferentially across the teeth (1b).

2. A power transmission belt as claimed in claim 1 characterized in that said belt is a raw edge belt.

3. A power transmission belt as claimed in claim 1 characterized in that said belt is a timing belt.

4. A power transmission belt as claimed in claim 1 characterized in that said belt is a cog belt.

5. A method of manufacture of a power transmission belt from an elastomeric material with tensile cord reinforcement, using a cylindrical internal die (4) the cylindrical circumference of which is axially toothed to provide a plurality of outer faces (5a) to form the valleys (1a) between the teeth of said belt and a plurality of grooves (5b) alternating with said outer faces to form the teeth (1b) of the belt and a cylindrical external die (6) disposed concentrically about the internal die (4), the inner periphery of the external die being spaced away from said outer faces (5a) of said internal die, which method is characterized by the steps of covering said cylindrical face of said internal die with a bulky non-woven fabric (3) without pressure, winding the tensile cord (2) spirally over said non-woven fabric along the outer cylindrical face of said internal die so as to compress said non-woven fabric on said outer faces (5a) to provide a predetermined thickness thereof on said outer faces, placing said external die (6) about said internal die, injecting the elastomeric material into the gap between the internal and external dies, hardening said elastomer material and extracting the moulded body.

6. A method as claimed in claim 5, further comprising the step of cutting said moulded body into slices of predetermined axial length to form a plurality of toothed belts.

**Patentansprüche**

1. Endloser Kraftübertragungsriemen mit einem Körper (1) und über dem Umfang an der inneren Peripherie des Körpers getrennt angeordneter Zähne (1b), wobei zwischen benachbarten Zähnen Einschnitte (1a) sind und der Riemen aus einer Matrix aus elastomerem Material gebildet sind, in das Spannungscords (2), die sich über den Umfang durch den Körper (1) in einer vorbestimmten Tiefe von der Oberfläche der Einschnitte erstrecken, und eine Schicht aus hochfestem, nichtgewebten Fassermaterial (3) eingebettet sind, das sich kontinuierlich entlang des Umfanges des Riemens an der radialen inneren Seite der Cords (2) erstreckt und das elastomere Material durch die Schicht verteilt ist, dadurch gekennzeichnet, daß die Schicht (3), wo sie sich am Umfang über die Einschnitte (1a) erstreckt, radial zusammengedrückt ist und im wesentlichen nicht gedrückt ist, wo sie sich am Umfang über die Zähne (1b) erstreckt.

2. Kraftübertragungsriemen nach Anspruch 1, dadurch gekennzeichnet, daß der Riemen ein Riemen mit rauher Kante ist.

3. Kraftübertragungsriemen nach Anspruch 1, dadurch gekennzeichnet, daß der Riemen ein Schaltriemen ist.

4. Kraftübertagungsriemen nach Anspruch 1, dadurch gekennzeichnet, daß der Riemen ein Zahnriemen ist.

5. Verfahren zur Herstellung eines Kraftübertragungsriemens aus einem elastomeren Material mit Spannungscordverstärkung unter Verwendung einer zylindrischen, inneren Form (4), deren zylindrischer Umfang axial gezahnt ist, um eine Vielzahl äußerer Flächen (5a) zu erhalten, um die Einschnitte (1a) zwischen den Zähnen des Riemens und eine Vielzahl von Nuten (5b) abwechselnd mit äußeren Flächen zu bilden, um Zähne (1b) des Riemens zu schaffen, und mit einer zylindrischen äußeren Form (6), die konzentrisch um die innere Form (4) angeordnet ist, wobei der innere Umfang der äußeren Form von den äußeren Flächen (5a) der inneren Form getrennt ist, und das Verfahren durch die Schritte gekennzeichnet ist, daß die zylindrische Fläche der inneren Form mit einem bauschigen Non-Woven (3) ohne Druck bedeckt wird, der Spannungscord (2) spiralförmig über das Non-Woven entlang der äußeren zylinderischen Fläche der inneren Form gewickelt wird, so daß das Non-Woven auf den äußeren Flächen 5a zusammengedrückt wird, um eine vorbestimmte Dicke auf den äußeren Flächen zu bilden, daß die äußere Form (6) über die innere Form gesetzt wird, daß das elastomere Material in den Spalt zwischen der inneren und äußeren Form injiziert wird, daß das elastomere Material gehärtet und der geformte Körper extrahiert wird.

6. Verfahren nach Anspruch 5, daß es weiters den Schritt des Schneidens des geformten Körpers in Scheiben vorbestimmter axialer Länge aufweist, um eine Vielzahl von gezahnten Riemen zu schaffen.

**Revendications**

1. Courroie sans fin de transmission comprenant un corps (1) et des dents (1b) espacées suivant la circonférence sur la périphérie interne du corps muni de creux (1a) entre des dents adjacentes, la courroie étant formée à partir d'une matrice en élastomère dans lequel sont insérés des cordons (2) extensibles s'étendant suivant la circonférence à travers le corps (1) à une profondeur predéterminée de la surface des creux, et une couche de matériau (3) fibreux non tissé à résistance élevée s'étendant continûment suivant la circonférence de la courroie sur le côté interne radial des cordons (2), l'élastomère étant diffusé à travers la couche, caractérisée en ce que la couche (3) est comprimée radialement à l'endroit où elle s'étend suivant la circonférence à travers les creux (1a) et est sensiblement non compressée à l'endroit où elle s'étend suivant la circonférence à travers les dents (1b).

2. Courroie de transmission selon la revendication 1, caractérisée en ce que la courroie est une courroie à flanc ouvert.

3. Courroie de transmission selon la revendication 1, caractérisée en ce que la courroie est une courroie de synchronisation.

4. Courroie de transmission selon la revendication 1, caractérisée en ce que la courroie est une courroie dentée.

5. Procédé pour la fabrication d'une courroie de transmission à partir d'un élastomère comportant un renforcement à cordon élastique, utilisant une matrice (4) interne cylindrique, la circonférence cylindrique de laquelle étant dentée axialement afin de former une pluralité de faces externes (5a) pour former les creux (1a) entre les dents de la courroie et une pluralité de rainures (5b) en alternance avec les faces externes pour former les dents (1b) de la courroie et une matrice (6) externe cylindrique disposée concentriquement à la matrice (4) interne, la périphérie interne de la matrice externe étant espacée des faces externes (5a) de la matrice interne, ledit procédé étant caractérisé par les étapes de couverture, sans pression, des faces cylindriques de la matrice interne avec une nappe (3) non tissée bouffante, d'enroulage du cordon (2) élastique en spirale sur la nappe non tissée le long de la face cylindrique externe de la matrice interne de façon à comprimer la nappe non tissée sur les faces (5a) externes pour obtenir une épaisseur prédéterminée de celle-ci sur les faces externes, de mise en place de la matrice (6) externe autour de la matrice interne, d'injection de l'élastomère dans l'espace compris entre les matrices interne et externe, de solidification du matériau élastomère et d'extraction du corps moulé.

6. Procédé selon la revendication 5, comprenant de plus l'étape de tronçonnage du corps moulé en tranches de longueur axiale prédéterminée afin de constituer une pluralité de courroies à denture.

## Fig. 1A

## Fig. 1B

Fig. 2

3

5b 5a

5

4

5b

5a

Fig. 3

2

2

3

3

H

3

5b 5a

5

4a

5b

Fig. 4

## Fig. 5

## Fig. 6A

## Fig. 6B

Fig.7A

Fig.7B

## Fig. 8A

## Fig. 8B